# EUROPEAN PATENT APPLICATION

(11) **EP 4 589 682 A1**
(43) Date of publication of application: **23.07.2025**
(21) Application number: 23876262.9
(22) Date of filing: 30.06.2023
(51) Int. Cl.: H01M 4/36, H01M 4/62, H01M 10/052

(54) **NEGATIVE ELECTRODE MATERIAL, PREPARATION METHOD THEREFOR, SECONDARY BATTERY, AND ELECTRICAL DEVICE**

(30) Priority: 10.10.2022 CN 202211237095
(71) Applicant: Huawei Technologies Co., Ltd., Shenzhen, Guangdong 518129 (CN)
(72) Inventor: SHA, Yujing, Shenzhen, Guangdong 518129 (CN); CHEN, Xiaoxue, Wuhan, Hubei 430074 (CN); GONG, Meng, Shenzhen, Guangdong 518129 (CN); SUN, Yongming, Wuhan, Hubei 430074 (CN); XIA, Shengan, Shenzhen, Guangdong 518129 (CN)
(74) Representative: Körber, Martin Hans
(86) International application number: PCT/CN2023/104986
(87) International publication number: WO 2024/078053

(57) **Abstract**

This application provides a negative electrode material and a preparation method thereof, a secondary battery, and a power-consuming device. The negative electrode material in this application is of a core-shell structure including an inner core and an outer shell. The inner core is a negative electrode active material. The outer shell includes a first shell layer coating a surface of the inner core and a second shell layer coating a surface of the first shell layer, the first shell layer is a transition metal compound layer, the second shell layer is a conducting layer, a maximum thickness of the first shell layer is less than or equal to 10 nm, and the second shell layer is a carbon layer. A total thickness of the outer shell is less than or equal to 15 nm. Based on the negative electrode material, structural stability of the negative electrode material can be improved, a probability of cracking of a coating layer can be reduced, and high energy density of the negative electrode material can be maintained.

## Description

### CROSS-REFERENCE TO RELATED APPLICATIONS

This application claims priority to Chinese Patent Application No. 202211237095.X, filed with the China National Intellectual Property Administration on October 10, 2022 and entitled "NEGATIVE ELECTRODE MATERIAL, SECONDARY BATTERY, AND POWER-CONSUMING DEVICE", which is incorporated herein by reference in its entirety.

### TECHNICAL FIELD

This application relates to the field of batteries, and specifically, to a negative electrode material and a preparation method thereof, a secondary battery, and a power-consuming device.

### BACKGROUND

As people have an increasing requirement on a lifespan of an energy storage battery, interface stability of a negative electrode in the battery during charging and discharging needs to be improved urgently. Graphite and silicon-based materials are the most studied negative electrode materials currently. A main structure of an existing coating layer on a surface of graphite is amorphous carbon, which implements fast transport of electrons between an interface and a bulk phase, thereby improving a fast charging capability of the graphite. However, there is still no good solution for improving interface stability of graphite and increasing a cycle life. Silicon, with theoretical specific capacity of 4200 mAh/g, is a negative electrode material with the highest theoretical capacity. However, a silicon negative electrode has an unstable structure. During charging and discharging, new SEI films are continuously formed, on a surface of silicon, with an electrolyte. As a result, the electrolyte is exhausted, and battery capacity decreases quickly. To resolve this problem, a silicon negative electrode material is usually coated to reduce occurrence of side reactions between the silicon material and an electrolyte, and improve stability of an SEI film. An existing coating method usually includes liquid-phase coating, nanoparticle heterogeneous coating, and ALD/CVD precision coating. A negative electrode material of a core-shell structure can be formed by using the foregoing method. A transition metal compound can effectively resist occurrence of side reactions between a silicon-based material and an electrolyte. In this case, in an existing negative electrode material of a core-shell structure, an outer shell layer usually includes a transition metal compound layer, to improve interface stability between the silicon-based material and the electrolyte. However, in an existing silicon-based material with a coating layer, the coating layer is usually of a crystal structure with a large thickness, usually 25 nm or more. With the coating layer of such thickness, energy density of the negative electrode material is reduced, and the coating layer is likely to crack in a long-period process of chargedischarge cycles, and consequently battery capacity is likely to decrease sharply.

### SUMMARY

This application provides a negative electrode material and a preparation method thereof, a secondary battery, and a power-consuming device, to improve structural stability of the negative electrode material, reduce a probability of cracking of a coating layer, and maintain high energy density of the negative electrode material.

According to a first aspect, this application provides a negative electrode material for a secondary battery. The negative electrode material is of a core-shell structure including an inner core and an outer shell. The inner core is a negative electrode active material. The outer shell includes a first shell layer coating a surface of the inner core and a second shell layer coating a surface of the first shell layer, the first shell layer is a dense transition metal compound layer, the second shell layer is a conducting layer, the first shell layer includes at least a transition metal compound of a layered structure, a maximum thickness of the transition metal compound layer is less than or equal to 10 nm, and a total thickness of the outer shell is less than or equal to 15 nm.

The negative electrode material in this application is of a core-shell structure. The inner core is a negative electrode active material. The outer shell is of a double-layer structure including a first shell layer and a second shell layer. The first shell layer coats a surface of the inner core, and the second shell layer coats a surface of the first shell layer. The first shell layer includes at least a transition metal compound, and a crystal structure of the transition metal compound is layered. When the transition metal compound is dispersed in a medium or is ground at a high speed, very small structures are easily formed and coat the surface of the inner core to form the first shell layer of a dense amorphous structure, to help provide more active ion transport channels and improve a conduction capability of the negative electrode material for active ions. The second shell layer can improve an interface electron conduction capability of the negative electrode material, for improving functionality of the second shell layer in addition to the interface electron conduction capability. The first shell layer and the second shell layer have a total thickness less than or equal to 15 nm, which form an ultra-thin structure, and the resulting outer shell may be used as an artificial SEI film. When the negative electrode active material of the inner core changes in volume, the outer shell may have strong skin effect, which can significantly improve structural stability of the negative electrode material. When the negative electrode material is used in a secondary battery, cycle stability of the secondary battery can be effectively improved, and consumption of an electrolyte can be reduced.

In an optional implementation, the second shell layer includes at least one of carbon, a conducting polymer, a mixture of carbon and a transition metal compound, and a mixture of a conducting polymer and a transition metal compound. A material of the second shell layer is not limited to an amorphous carbon negative electrode, and further includes carbon nanofibers, nanotubes, graphene, and the like. Stacking and connection of one-dimensional and twodimensional carbon materials can enhance strength of the shell layer. A material of the second shell layer further includes a conducting polymer. The second shell layer formed with the conducting polymer can have specific elasticity, so that the outer shell layer has better changeability when the material of the inner core expands/contracts during charging/discharging. A material of the second shell layer further includes a mixture of a conductive material and a transition metal compound. Compared with a pure conducting layer, the mixture obtained with the transition metal compound can have both an electron conduction capability and an ion conduction capability, and a natural transition structure of the transition metal compound is formed between the second shell layer and the first shell layer, improving structural stability between the first shell layer and the second shell layer.

In an optional implementation, a pore size of the first shell layer is not greater than 5 nm, to form a dense transition metal compound layer.

In an optional implementation, a component of the transition metal compound layer includes at least one of a transition metal oxide, a transition metal carbide, a transition metal nitride, and a transition metal carbonitride, or a mixture of two or more of the foregoing types. A plurality of transition metal mixtures can be fused to some extent during high-temperature treatment, improving density of the first shell layer. A general formula of a component of the transition metal compound layer is MXn(Ym), M is a transition metal element, X is a non-metal element, Y is a functional group, and Y includes at least one of O, F, or OH, where n > 0 and m ≥ 0. For example, M includes at least one of V, Mo, Ti, or Al. X includes at least one of O, C, or N.

The transition metal compound layer may be electrochemically inert or non-electrochemically inert. When MXn (Ym) is non-electrochemically inert, a lithium intercalation potential of MXn(Ym) is higher than that of the negative electrode active material of the inner core, and the negative electrode active material is used as a "resource pool" for storage and transport of active ions, so that direct contact between an electrolyte and a surface of the negative electrode active material at a low potential is reduced, avoiding an interface side reaction. Compared with a single carbon interface or a single inorganic compound interface, a double-shell-layer structure formed based on synergistic effect of the dense MXn(Ym) layer and the outer conducting layer has high interface stability, a high ion conduction capability, and a high charge exchange capability, so that when the negative electrode material in this application is used in a secondary battery, the secondary battery can have higher initial coulombic efficiency and better cycle stability.

In an optional implementation, a lithium intercalation potential of the first shell layer is higher than a lithium intercalation potential of the inner core, a lithium deintercalation potential of the first shell layer is greater than 1 V, and lithium deintercalation capacity of the first shell layer within 1 V is 30% or less of lithium deintercalation capacity of the first shell layer within 3 V. In this way, the first shell layer with higher electrochemical stability can be obtained.

In an optional implementation, a mass proportion of the transition metal element of the first shell layer in the negative electrode material is less than or equal to 5%.

In an optional implementation, a mass proportion of the second shell layer in the negative electrode material is less than or equal to 5%.

In an optional implementation, the negative electrode active material includes at least one of a carbon-based negative electrode material, a silicon-based negative electrode material, a tin-based negative electrode material, and a phosphorus-based negative electrode material.

The carbon-based negative electrode material includes at least one of graphite, soft carbon, hard carbon, and amorphous carbon; the silicon-based negative electrode material includes at least one of pure silicon, silicon oxygen, magnesium-doped silicon oxygen, lithium-doped silicon oxygen, or silicon carbon; and the phosphorus-based negative electrode material includes at least one of red phosphorus, white phosphorus, black phosphorus, blue phosphorus, a phosphorus-containing complex, and a phosphorus-containing mixture.

According to a second aspect, this application provides a method for preparing a negative electrode material. The preparation method includes: mixing a negative electrode active material and a layered transition metal compound, and performing ball milling, to obtain a negative electrode material with a coating of a first shell layer; and mixing the negative electrode material with the coating of the first shell layer and a conductive agent, and performing drying, to obtain a negative electrode material with a coating of two shell layers.

In an optional implementation, a method for mixing includes solid-phase stirring, high-speed dispersion, wet mixing and drying, or spray drying.

In an optional implementation, during ball milling, a rotational speed for the ball milling is 200 rpm to 800 rpm, and time for the ball milling is 0.5 h to 24 h.

In an optional implementation, a mass ratio of the negative electrode material with the coating of one shell layer to a carbon source is 100:0.5 to 100:20.

In an optional implementation, a carbonization temperature for carbonization treatment is 350°C to 900°C, and carbonization time for the carbonization treatment is 1 h to 10 h.

In an optional implementation, a carbon source includes at least one of methanol, ethanol, benzene, methane, acetylene, 1,3-butadiene, or polyvinyl alcohol.

For data in the foregoing possible implementations of this application, such as the transition metal compound of the layered structure, the total thickness of the outer shell, the mass proportion of the first shell layer, the mass proportion of the second shell layer, the rotational speed for ball milling, the time for ball milling, and the lithium intercalation potential, during measurement, all values within an engineering measurement error range should be understood as falling within the scope of this application.

According to a third aspect, this application further provides a secondary battery. The secondary battery includes a positive electrode, a negative electrode, and an electrolyte between the positive electrode and the negative electrode. The negative electrode includes a negative electrode current collector and a negative electrode material layer. The negative electrode material layer includes the negative electrode material according to the first aspect of this application.

According to a fourth aspect, this application further provides a power-consuming device, including an electric component and the secondary battery in this application. The secondary battery is electrically connected to the electric component to supply power to the electric component.

The power-consuming device includes but is not limited to a mobile phone, a computer, an electric vehicle, an energy storage system, and an electric tool.

For technical effects that may be achieved according to the second aspect to the fourth aspect, refer to the corresponding effect descriptions in the first aspect. Details are not described herein again.

### BRIEF DESCRIPTION OF DRAWINGS

FIG. 1 is a diagram of a working principle of a lithium battery;
FIG. 2 is a diagram of a structure of a negative electrode material according to an embodiment;
FIG. 3 is a diagram of a ball milling process of a negative electrode active material and a transition metal compound;
FIG. 4 is a SEM image according to Embodiment 1;
FIG. 5 is an XRD graph according to Embodiment 2; and
FIG. 6 is an EDS graph according to Embodiment 2.

Reference numerals:
11: Positive electrode; 12: Negative electrode; 13: Separator; 14: Electrolyte; 121: Inner core; 122: Outer shell; 123: First shell layer;
124: Second shell layer; 125: Negative electrode material; 126: Transition metal compound; 15: Ball milling bead.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. As used in this specification and the appended claims of this application, singular expression forms "one", "a", and "this" are also intended to include expression forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

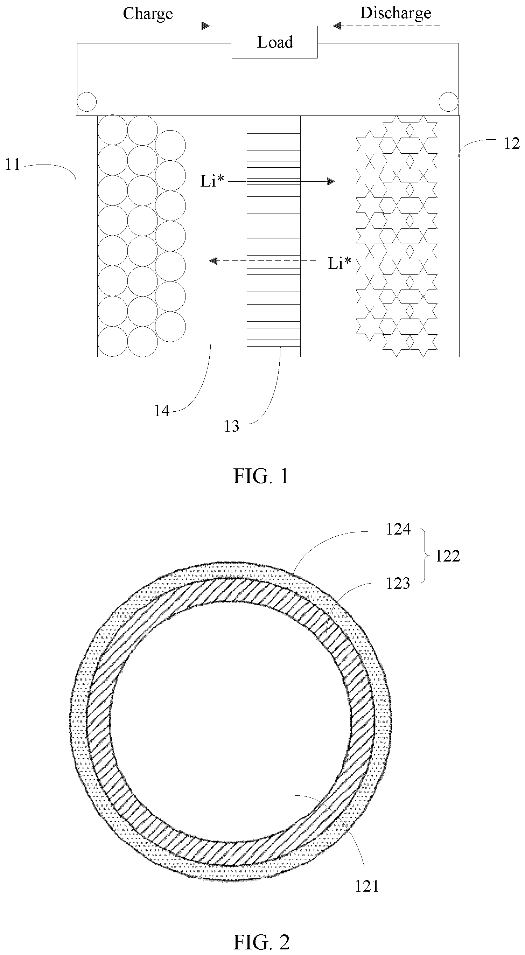

FIG. 1 is a diagram of a working principle of a lithium battery. As shown in FIG. 1, the lithium battery may include a positive electrode 11, a negative electrode 12, an electrolyte 14, a separator 13, and a corresponding connecting accessory and loop. Lithium ions can be intercalated into or deintercalated from active materials in the positive electrode 11 and the negative electrode 12, thereby implementing energy storage and release. The electrolyte 14 is a carrier for transport of lithium ions between the positive electrode and the negative electrode. The separator 13 allows lithium ions to pass through but blocks electrons, thereby implementing conduction of the lithium ions and preventing a short circuit between the positive electrode and the negative electrode. The active materials in the positive electrode and the negative electrode are main parts that perform an energy storage function, and directly affect energy density, cycle performance, and safety performance of a cell. In an aspect, there is no mature strategy for mainstream commercial graphite to improve interface stability and increase a cycle life. In another aspect, when a current commercial material, lithium cobaltate, for the positive electrode 11 reaches a maximum limit of use (4.4 V, press density 4.2 g/cm³) of the lithium cobaltate, actual capacity of the negative electrode 12 is crucial for improving energy density of the entire cell. However, a current commercial graphite negative electrode has actual capacity per gram of 355 mAh/g, which is close to a theoretical value (372 mAh/g). Therefore, it is essential to accelerating commercial use of a silicon-based material. On the premise of maintaining high capacity per gram of the silicon-based material, resolving a problem of an unstable interface between the silicon-based material and an electrolyte helps improve long-cycle stability of a battery, and irreversible consumption rates of active lithium ions and the electrolyte in the battery, improving a service life and safety of an electronic product while improving energy density of the battery, thereby improving overall competitiveness of the product.

To resolve a problem of an interface between a negative electrode material 125 and the electrolyte 14, this application provides a negative electrode material. FIG. 2 is a diagram of a structure of a negative electrode material according to an embodiment. As shown in FIG. 2, the negative electrode material is of a core-shell structure including an inner core 121 and an outer shell 122. The inner core 121 is a granular negative electrode material 125.

The negative electrode material 125 may be, for example, at least one of a carbon-based negative electrode material, a silicon-based negative electrode material, a tin-based negative electrode material, and a phosphorus-based negative electrode material. The carbon-based negative electrode material includes at least one of graphite, soft carbon, hard carbon, and amorphous carbon. The silicon-based negative electrode material includes at least one of pure silicon, silicon oxygen, magnesium-doped silicon oxygen, lithium-doped silicon oxygen, or silicon carbon. The phosphorus-based negative electrode material includes at least one of red phosphorus, white phosphorus, black phosphorus, blue phosphorus, a phosphorus-containing complex, and a phosphorus-containing mixture.

Still refer to FIG. 2. In an embodiment of this application, the outer shell 122 is of a double-shell structure including a first shell layer 123 and a second shell layer 124. The first shell layer 123 coats a surface of the inner core 121, that is, coats a surface of a negative electrode material 125 particle, and is a transition metal compound layer. A component of the amorphous transition metal compound layer includes but is not limited to at least one of a transition metal oxide, a transition metal carbide, a transition metal nitride, and a transition metal carbon carbonitride. A general formula of the component of the amorphous transition metal compound layer may be expressed as MXn(Ym). M is a transition metal element, and M includes but is not limited to at least one of V, Mo, Ti, Zr, Nb, or Al. X is a non-metal element, and includes but is not limited to at least one of O, C, S, or N. Y is a functional group, and includes but is not limited to at least one of O, F, Cl, or OH. In this formula, n > 0 and m ≥ 0. When the elements X and Y are different, a layered material with a stronger interlayer ion transport capability and a stronger structural remodeling capability may be formed, for example, Ti₃C₂(T), where T is OH or F. In addition, a layered structure has better stacking effect, which can further reduce voids in the first shell layer.

The first shell layer 123 includes at least a dense transition metal compound layer. On the surface of the inner core 121, a transition metal compound layer of a dense structure with a thickness less than or equal to 10 nm may be formed by bridging small particles. In an optional embodiment, a mass proportion of the first shell layer 123 in the negative electrode material may be less than or equal to 5%. It may be understood that the layered structure in this application means an ordered and layered arrangement of metal atoms and non-metal atoms in a crystal structure of the transition metal compound.

A lithium intercalation potential of the first shell layer 123 is higher than a lithium intercalation potential of the inner core 121, a lithium deintercalation potential of the first shell layer 123 is greater than 1 V, and lithium deintercalation capacity of the first shell layer 123 within 1 V is 30% or less of lithium deintercalation capacity of the first shell layer 123 within 3 V. In this case, the structure of the first shell layer 123 can be more stable. The lithium intercalation potential of the transition metal compound layer is higher than that of the negative electrode material 125 of the inner core 121. Due to a lithium intercalation capability, the transition metal compound layer can also provide good lithium ion transport channels for the negative electrode material 125 of the inner core 121. In addition, the lithium intercalation potential of the transition metal compound layer is higher than that of the negative electrode material 125 of the inner core 121, which can further avoid formation of a large quantity of SEI films due to decomposition of the electrolyte 14 on an interface of the negative electrode material at a low potential, thereby improving interface stability between the negative electrode material and the electrolyte 14, and reducing occurrence of side reactions.

Still refer to FIG. 2. A surface of the first shell layer 123 is further coated with the second shell layer 124, the second shell layer 124 is a conducting layer, and a material of the second shell layer 124 includes but is not limited to at least one of carbon, a conducting polymer, a mixture of carbon and a transition metal compound, a mixture of a conducting polymer and a transition metal compound, or a mixture of carbon and a polymer and a transition metal compound. A total thickness of the first shell layer 123 and the second shell layer 124 is less than or equal to 15 nm. In an optional embodiment, a mass proportion of a metal element of the second shell layer 124 in the negative electrode material may be less than or equal to 5%. Coating the first shell layer 123 with the second shell layer 124 can further improve an interface charge conduction capability of the negative electrode material 125 and improve interface stability between the negative electrode material 125 and the electrolyte 14.

Compared with a single carbon interface or a single inorganic compound interface, the outer shell 122 with two shell layers formed by the amorphous dense MXn(Ym) layer and the carbon layer may be used as an artificial SEI film. The SEI film has high interface stability, a high ion conduction capability, and a high charge exchange capability, so that when the negative electrode material in this application is used in a lithium battery, the lithium battery can have advantages of high initial coulombic efficiency and good cycle stability.

The foregoing describes the structure and the material composition of the negative electrode material. The following describes a preparation method of the negative electrode material.

In an embodiment of this application, a method for preparing a negative electrode material may include the following step S11 and step S12.

S11: Mix a negative electrode active material and a transition metal compound 126 of a layered structure, and perform ball milling, to obtain a negative electrode material with a coating of one shell layer.

It is found through research that it is easier for the transition metal compound 126 of the layered structure to implement thin-layer delamination and nanocrystallization, to disperse on and coat the surface of the negative electrode material 125 particle, so that a bridge is more easily formed between particles, thereby forming a denser and thinner first shell layer 123.

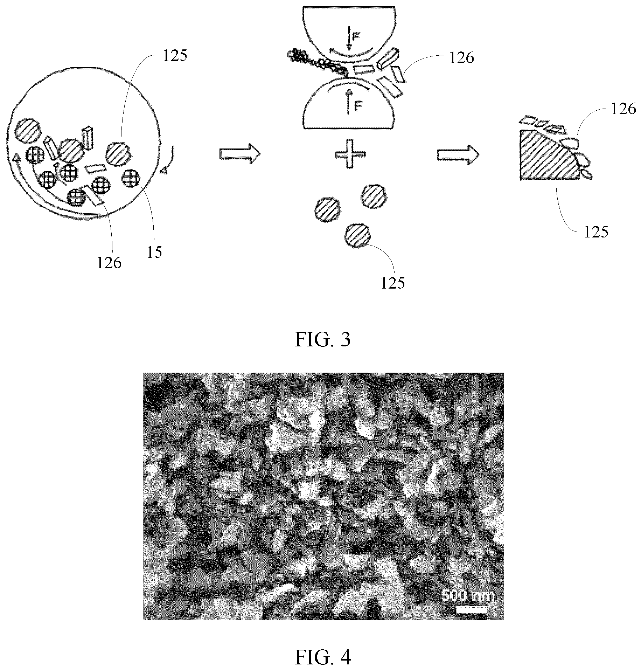

FIG. 3 is a diagram of a ball milling process of a negative electrode active material and the transition metal compound 126. As shown in FIG. 3, the negative electrode material 125 and the transition metal compound 126 are mixed in a specific ratio and placed in a ball mill jar. In addition, to avoid a decrease in capacity and initial coulombic efficiency caused by overoxidation of the negative electrode material 125 in the ball milling process, a gas in the jar needs to be replaced with an inert gas. A specific quantity of ball milling beads 15 are added to mix the negative electrode material 125 and the transition metal compound 126 at a specific rotational speed. In addition, because the transition metal compound 126 has a softer structure, and interlayer delamination and fragmentation are easily implemented in the presence of mechanical energy. A layered material obtained after delamination forms a coating layer with a bridge structure on the surface of the negative electrode material 125 particle. Therefore, dense, uniform, and ultra-thin coating effect is more easily achieved, and finally dense coating is implemented on an outer layer of the negative electrode material 125 particle. During ball milling, a rotational speed for the ball milling may be 200 rpm to 800 rpm, and time for the ball milling may be 0.5 h to 24 h.

S12: Mix the negative electrode material with a structure of the one shell layer and a conductive agent, and perform drying, to obtain a negative electrode material with a structure of two shell layers. A mass ratio of the negative electrode material with the structure of the one shell layer to the conductive agent may be 100:0.5 to 100:20. For example, a carbonization temperature for carbonization treatment may be 350°C to 800°C, and carbonization time for the carbonization treatment may be 1 h to 10 h. Through the foregoing carbonization process, the first shell layer 123 can be maintained in an amorphous coating state while a carbon layer is formed.

In embodiments of this application, a carbon coating method includes but is not limited to a solid-phase method, a liquid-phase method, and a gas-phase method. A carbon source includes but is not limited to a sugar carbon source, an aromatic carbon source, a low-molecular-weight liquid carbon source, or a gas carbon source. To implement thin-layer coating, a low-molecular-weight carbon source and a gas carbon source are preferred, for example, at least one of methanol, ethanol, benzene, methane, acetylene, 1,3-butadiene, or polyvinyl alcohol.

An artificial SEI film with two shell layers is formed by introducing the carbon source and further performing carbonization, which can further improve interface stability between the negative electrode material and the electrolyte.

The following further describes performance of the negative electrode material in this application in detail with reference to specific embodiments.

### Embodiment 1

0.12 g of vanadium dioxide VO₂ and 5 g of silicon powder are mixed uniformly in a glove box and placed in a ball mill jar, and are subject to mechanical ball milling under specified conditions of a rotational speed of 300 rpm and total duration of 2.5 h, to obtain a silicon negative electrode material VO₂-Si of a core-shell structure. The VO₂-Si powder is taken into a tube furnace. After vacuumizing is performed, N₂ is introduced for atmosphere protection. After heating is performed to 750°C, a methane/hydrogen mixture gas (in a volume ratio of 1:10) is introduced for 15 min, and then the gas introduction is stopped. The gas is replaced with N₂ for protection. After three hours of heat preservation, natural cooling is performed to room temperature, to obtain a silicon negative electrode material with a double-shell-layer artificial SEI film structure, recorded as VO₂-Si-C-1.

### Embodiment 2

0.15 g of vanadium dioxide VO₂ and 3.88 g of silicon powder are mixed uniformly in a glove box and placed in a ball mill jar, and are subject to mechanical ball milling under specified conditions of a rotational speed of 300 rpm and total duration of 2.5 h, to obtain a silicon negative electrode material VO₂-Si of a core-shell structure. 0.5 g of polyvinyl alcohol (PVA) is dispersed into 50 mL of ultrapure water, and is heated and stirred until PVA is fully dissolved. 0.5 g of VO₂-Si prepared in step (1) is added into the aqueous PVA solution, and is then heated and stirred until wet gel is formed. The wet gel is placed in a blast drying oven at 80°C and dried overnight. The dried gel is taken out and then placed in a tube furnace, with a protective gas Ar introduced, and heated to 650°C. After three hours of heat preservation, natural cooling is performed to room temperature, to obtain a silicon negative electrode material with a double-shell-layer artificial SEI film structure, recorded as VO₂-Si-C-2.

### Embodiment 3

0.1 g of Mxene powder Ti₂CF₂ and 3 g of silicon powder are mixed uniformly in a glove box and placed in a ball mill jar, and are subject to mechanical ball milling under specified conditions of a rotational speed of 600 rpm and total duration of 2 h, to obtain a silicon negative electrode material Ti₂CF₂-Si of a core-shell structure. The material is immersed in a toluene solution for 6 h and filtered. Then, the filter residue is placed in a blast drying oven at 80°C and dried overnight. The dried filter residue is taken out and then placed in a tube furnace, with a protective gas Ar introduced, and heated to 680°C. After three hours of heat preservation, natural cooling is performed to room temperature, to obtain a silicon negative electrode material with a double-shell-layer artificial SEI film structure, recorded as Ti₂CF₂-Si-C-3.

### Embodiment 4

The silicon negative electrode material obtained in Embodiment 2 and graphite are mixed at a mass ratio of 15:85 to prepare a composite electrode. A specific operation is as follows. 0.12 g of the silicon negative electrode material VO₂-Si-C-2 in Embodiment 2 is weighed and mixed with 0.68 g of graphite material uniformly in a mortar, to obtain a composite electrode material.

### Embodiment 5

10 mL of MoO₃ nanoparticle ink (purchased from Sigma) and 20 g of graphite powder are mixed, ground, and dispersed, and transferred into a ball mill jar. Ball milling is performed at a rotational speed of 350 rpm for 30 min, to form a first layer of transition metal oxide MoO₃ coating on a surface of the graphite. The resulting mixture is taken out and baked at a low temperature to remove ethanol from the ink. The sample with the first layer of coating and a CNT slurry are dispersedly mixed, stirred, filtered, and dried at a low temperature, to form a CNT nanowire winding structure with an electron conduction capability on an outer surface, recorded as G-MoO₃-CNT.

### Embodiment 6

0.1 g of Mxene powder Ti₂CF₂ and 3 g of silicon powder are mixed uniformly in a glove box and placed in a ball mill jar, and are subject to mechanical ball milling under specified conditions of a rotational speed of 600 rpm and total duration of 2 h, to obtain a silicon negative electrode material Ti₂CF₂-Si of a core-shell structure. The material is immersed in a mixed solution of toluene, graphene sheets, and Ti₂CF₂ for 6 h and filtered. Then, the filter residue is placed in a blast drying oven at 80°C and dried overnight. The dried filter residue is taken out and then placed in a tube furnace, with a protective gas Ar introduced, and heated to 680°C. After three hours of heat preservation, natural cooling is performed to room temperature, to obtain a silicon negative electrode material with a double-shell-layer artificial SEI film structure, recorded as Ti₂CF₂-Si-C/Graphene/Ti₂CF₂-4.

### Comparative Example 1

5 g of silicon powder is taken out in a glove box and placed in a ball mill jar, and is subject to mechanical ball milling under specified conditions of a rotational speed of 300 rpm and total duration of 2.5 h, to obtain a silicon negative electrode material that is not subject to coating treatment, recorded as Si.

### Comparative Example 2

0.12 g of vanadium dioxide VO₂ and 3.88 g of silicon powder are mixed uniformly in a glove box and placed in a ball mill jar, and are subject to mechanical ball milling under specified conditions of a rotational speed of 300 rpm and total duration of 2.5 h, to obtain a silicon negative electrode material of a core-shell structure, recorded as VO₂-Si, where a core layer is a silicon particle, and a shell layer is a vanadium dioxide layer.

### Comparative Example 3

0.5 g of polyvinyl alcohol (PVA) is dispersed into 50 mL of ultrapure water, and is heated and stirred until PVA is fully dissolved. 0.5 g of the silicon negative electrode material Si obtained in Comparative Example 1 is added into the aqueous PVA solution, and is then heated and stirred until wet gel is formed. The wet gel is placed in a blast drying oven at 80°C and dried overnight. The dried gel is taken out and then placed in a tube furnace, with a protective gas Ar introduced, and heated to 650°C. After three hours of heat preservation, natural cooling is performed to room temperature, to obtain a silicon negative electrode material of a core-shell structure, recorded as Si-C, where a core layer is a silicon particle, and a shell layer is a carbon layer.

### Comparative Example 4

0.5 g of vanadium dioxide VO₂ and 5 g of silicon powder are mixed uniformly in a glove box and placed in a ball mill jar, and are subject to mechanical ball milling under specified conditions of a rotational speed of 300 rpm and total duration of 2.5 h, to obtain a silicon negative electrode material VO₂-Si of a core-shell structure. 0.5 g of polyvinyl alcohol (PVA) is dispersed into 50 mL of ultrapure water, and is heated and stirred until PVA is fully dissolved. 0.5 g of VO₂-Si prepared in step (1) is added into the aqueous PVA solution, and is then heated and stirred until wet gel is formed. The wet gel is placed in a blast drying oven at 80°C and dried overnight. The dried gel is taken out and then placed in a tube furnace, with a protective gas Ar introduced, and heated to 650°C. After three hours of heat preservation, natural cooling is performed to room temperature, to obtain a silicon negative electrode material with a double-shell-layer artificial SEI film structure, recorded as VO₂-Si-C-3.

In this comparative example, because an addition amount of VO₂ is much greater than a proportion limited in this application, in the preparation process, a thickness of the VO₂ layer formed on a surface of the silicon particle is much greater than 0.15 nm.

### Comparative Example 5

0.2 g of vanadium dioxide VO₂ and 5 g of silicon powder are mixed uniformly in a glove box and placed in a ball mill jar, and are subject to mechanical ball milling under specified conditions of a rotational speed of 300 rpm and total duration of 2.5 h, to obtain a silicon negative electrode material VO₂-Si of a core-shell structure. 0.5 g of polyvinyl alcohol (PVA) is dispersed into 50 mL of ultrapure water, and is heated and stirred until PVA is fully dissolved. 0.5 g of VO₂-Si prepared in step (1) is added into the aqueous PVA solution, and is then heated and stirred until wet gel is formed. The wet gel is placed in a blast drying oven at 80°C and dried overnight. The dried gel is taken out and then placed in a tube furnace, with a protective gas Ar introduced, and heated to 1000°C. After three hours of heat preservation, natural cooling is performed to room temperature, to obtain a silicon negative electrode material with a double-shell-layer artificial SEI film structure, recorded as VO₂-Si-C-4.

In this comparative example, because a carbonization temperature is 1000°C, at this carbonization temperature, particles in the VO₂ layer are of a crystal structure, and no amorphous VO₂ layer is formed.

### Comparative Example 6

4 g of silicon powder is added into 50 mL of mixed solution of ammonium molybdate and thiourea, with a concentration of ammonium molybdate of 8 mg/mL and a concentration of thiourea of 32 mg/mL. The solution is poured into a reactor at 180°C to react for 24 h, naturally cooled down to room temperature, washed, and dried, to obtain a silicon material with a MoS₂ coating. The silicon material is placed in a tube furnace, with a protective gas Ar introduced, and heated to 800°C. After three hours of heat preservation, natural cooling is performed to room temperature, to obtain a silicon negative electrode material with a double-shell-layer artificial SEI film structure, recorded as MoS₂-Si-C.

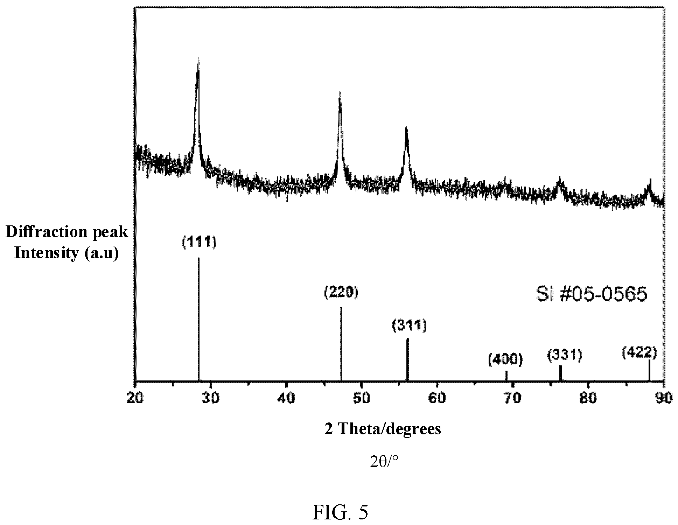

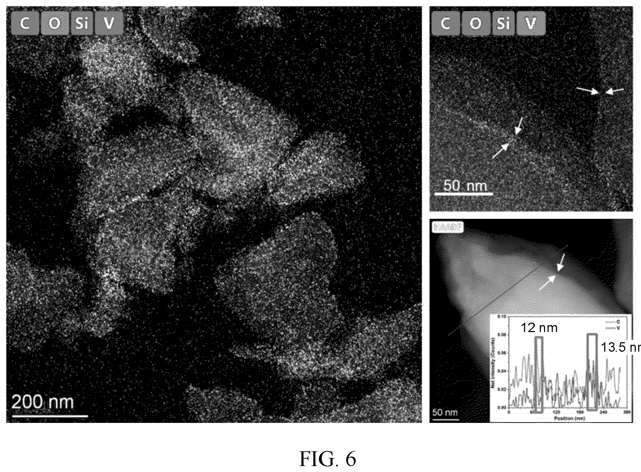

Structure information of the negative electrode material is measured by a scanning electron microscope (scanning electron microscope, SEM), X-ray diffraction (diffraction of x-rays, XRD), and energy dispersive X-ray spectroscopy (energy dispersive x-ray spectroscopy, EDS). FIG. 4 is a SEM image according to Embodiment 1. FIG. 5 is an XRD graph according to Embodiment 2. FIG. 6 is an EDS graph according to Embodiment 2.

As shown in FIG. 4, the negative electrode material sample in Embodiment 1 has a clean and flat surface, with no self-agglomerate of the coating. As shown in FIG. 5, a clear silicon characteristic diffraction peak can be observed, but there is no clear VO₂ characteristic diffraction peak, indicating that amorphous treatment on VO₂ is successfully implemented during the ball milling treatment in the synthesis process. Refer to FIG. 6. It is indicated that there is a clear shell layer structure on an interface of the particle of the silicon-based material. It is found through an EDS test on different elements that there are clearly two shell layers of elements V and C on the surface of the silicon-based material, respectively corresponding to VO₂ and C. Through an EDS line scan on the negative electrode material particles, it can be found that thicknesses of the two shell layers of VO₂/C are 12 nm and 13.5 nm respectively. This indicates that, according to embodiments of this application, relatively uniform double-shell-layer coating can be implemented successfully, with a coating thickness less than 15 nm.

### Comparative Example 7

5 g of graphite is subject to ball milling at a rotational speed of 350 rpm for 30 min, to obtain a graphite negative electrode material that is not subject to coating treatment, recorded as G.

The negative electrode material in each of the embodiments and the comparative examples is assembled into a lithium-ion button cell. Initial coulombic efficiency, capacity, and cycle performance of the corresponding lithium-ion cell are tested. Test results are listed in Table 1.

**Table 1**

| Sequence number | Initial charge specific capacity (mAh/g) | Coulombic efficiency | Capacity retention rate after 100 cycles |
|---|---|---|---|
| Embodiment 1 | 2770 | 87.9% | 73% |
| Embodiment 2 | 3065 | 87.1% | 75% |
| Embodiment 3 | 2680 | 86.8% | 72% |
| Embodiment 4 | 758 | 90% | 88% |
| Embodiment 5 | 353 | 94.7% | 98% |
| Embodiment 6 | 2597 | 86.5% | 87% |
| Comparative Example 1 | 1437 | 64.9% | 28% |
| Comparative Example 2 | 2205 | 79.5% | 9% |
| Comparative Example 3 | 3271 | 83.8% | 31% |
| Comparative Example 4 | 2215 | 82.5% | 56% |
| Comparative Example 5 | 2613 | 81.7% | 42% |
| Comparative Example 6 | 2405 | 84.6% | 53% |
| Comparative Example 7 | 354 | 93.1% | 95% |

As shown in Table 1, compared with Comparative Example 1 with no coating, and Comparative Example 2 and Comparative Example 3 with only single-shell-layer coating, the negative electrode materials with double-shell-layer coating in Embodiments 1 to 4 in this application all show higher initial charge specific capacity and higher coulombic efficiency, indicating that the double-shell-layer coating structure effectively improves interface performance of the silicon-based material.

With coating of only a first shell layer in Comparative Example 2, although the initial charge specific capacity and the coulombic efficiency are improved to some extent compared with the uncoated silicon, cycle stability of the corresponding button cell significantly decreases compared with Comparative Example 1, which may be related to a poor charge conduction capability of the coating layer of the first shell layer VO₂.

With coating of only an outer layer in Comparative Example 3, it can be learned from data in Table 1 that the initial charge specific capacity of Comparative Example 3 is the highest among all the samples, but the initial coulombic efficiency and the capacity retention rate after 100 cycles are still lower than those of the embodiments related to two shell layers. This is because, although the outer-shell-layer carbon coating improves an interface charge exchange capability, and the carbon layer is more stable than the silicon-based material to be used as an interface stabilization layer to reduce side reactions between the electrolyte and the silicon-based material, the carbon layer still has more interface side reactions than the double-shell-layer structure and has lower stability than the double-shell-layer structure due to inevitable pores in the carbon layer formed in the pyrolysis process, and a weak structural capability of carbon.

The data of Comparative Example 4 can prove that, when a total thickness of the outer shell layer is 15 nm or more, the performance of the corresponding negative electrode material is slightly lower. In Comparative Example 5, when the formed first shell layer is a non-amorphous layer, the performance of the corresponding negative electrode material is also lower than that in embodiments of this application. This may be because, when the first shell layer is an amorphous layer and has a thickness less than 15 nm, the obtained first shell layer has good skin effect, so that the negative electrode material in this application has higher structural stability when the silicon-based material changes in volume due to lithium intercalation and deintercalation. In Comparative Example 6, when the MoS₂ layer is used as a first shell layer, interface stability is poorer than that in Embodiment 1 and Embodiment 2, because a transition metal sulfide is likely to form a polysulfide in the cell, causing shuttle effect of polysulfide ions, and consequently causing rapid cycle attenuation.

The data of Embodiment 5 proves that, although the reversible capacity of the coated graphite decreases to some extent (the coating layer accounts for the mass of the entire negative electrode material), the initial coulombic efficiency of the graphite increases significantly, indicating that decomposition of the electrolyte on the interface and side reactions are significantly reduced. In addition, the capacity retention rate after 100 cycles also increases significantly, indicating that the coating layer effectively improves an interface reaction in a long-term cycle process.

In Embodiment 6, based on Embodiment 3, graphene and Ti₂CF₂ are introduced into carbon of the second shell layer. A layered structure of graphene and a layered structure of Ti₂CF₂ are stacked on each other. After drying and dehydration, the surface of the first shell layer is tightly coated with the second shell layer through hydrogen bonding between the graphene layer and the Ti₂CF₂ layer and between the first shell layer and the graphene and Ti₂CF₂ layers, avoiding a problem that bonding between pure amorphous carbon and the first shell layer is not strong.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A negative electrode material for a secondary battery, wherein the negative electrode material is of a core-shell structure comprising an inner core and an outer shell, wherein the inner core is a negative electrode active material; and the outer shell comprises a first shell layer coating a surface of the inner core and a second shell layer coating a surface of the first shell layer, the first shell layer is a transition metal compound layer, the second shell layer is a conducting layer, a maximum thickness of the transition metal compound layer is less than or equal to 10 nm, and a total thickness of the outer shell is less than or equal to 15 nm.

2. The negative electrode material according to claim 1, wherein the second shell layer comprises at least one of carbon, a conducting polymer, a mixture of carbon and a transition metal compound, and a mixture of a conducting polymer and a transition metal compound.

3. The negative electrode material according to claim 1 or 2, wherein a pore size of the first shell layer is not greater than 5 nm.

4. The negative electrode material according to any one of claims 1 to 3, wherein a general formula of a component of the transition metal compound layer is MXn(Ym), M is a transition metal element, X is a non-metal element, Y is a functional group, and Y comprises at least one of O, F, Cl, or OH, wherein n > 0 and m ≥ 0.

5. The negative electrode material according to claim 4, wherein M comprises at least one of V, Mo, Ti, Zr, Nb, or Al.

6. The negative electrode material according to claim 4, wherein X comprises at least one of O, C, or N.

7. The negative electrode material according to claim 4, wherein a lithium intercalation potential of the first shell layer is higher than a lithium intercalation potential of the inner core, a lithium deintercalation potential of the first shell layer is greater than 1 V, and lithium deintercalation capacity of the first shell layer within 1 V is 30% or less of lithium deintercalation capacity of the first shell layer within 3 V.

8. The negative electrode material according to any one of claims 1 to 7, wherein a mass proportion of the transition metal element of the first shell layer in the negative electrode material is less than or equal to 5%.

9. The negative electrode material according to any one of claims 1 to 8, wherein a mass proportion of the second shell layer in the negative electrode material is less than or equal to 5%.

10. The negative electrode material according to any one of claims 1 to 9, wherein the negative electrode active material comprises at least one of a carbon-based negative electrode material, a silicon-based negative electrode material, a tin-based negative electrode material, and a phosphorus-based negative electrode material;
the carbon-based negative electrode material comprises at least one of graphite, soft carbon, hard carbon, and amorphous carbon;
the silicon-based negative electrode material comprises at least one of pure silicon, silicon oxygen, magnesium-doped silicon oxygen, lithium-doped silicon oxygen, or silicon carbon; and
the phosphorus-based negative electrode material comprises at least one of red phosphorus, white phosphorus, black phosphorus, blue phosphorus, a phosphorus-containing complex, and a phosphorus-containing mixture.

11. A method for preparing the negative electrode material according to any one of claims 1 to 10, comprising:
mixing a negative electrode active material and a transition metal compound of a layered structure, to obtain a negative electrode material with a coating of one shell layer; and
mixing the negative electrode material with the coating of the one shell layer and a conductive agent, and performing drying, to obtain a negative electrode material with a coating of two shell layers.

12. The preparation method according to claim 11, wherein a method for mixing comprises solid-phase stirring, high-speed dispersion, wet mixing and drying, or spray drying.

13. The preparation method according to claim 11, wherein a temperature for heat treatment is 150°C to 900°C, and time for the heat treatment is 0.5 h to 10 h.

14. The preparation method according to claim 11, wherein a carbon source comprises at least one of methanol, ethanol, benzene, methane, acetylene, 1,3-butadiene, or polyvinyl alcohol.

15. A secondary battery, comprising a positive electrode, a negative electrode, and an electrolyte between the positive electrode and the negative electrode, wherein the negative electrode comprises a negative electrode current collector and a negative electrode material layer, and the negative electrode material layer comprises the negative electrode material according to any one of claims 1 to 10.

16. A power-consuming device, comprising an electric component and the secondary battery according to claim 15, wherein the secondary battery is electrically connected to the electric component to supply power to the electric component.
